# EUROPÄISCHE PATENTSCHRIFT

(11) **EP 1 568 467 B1**
(45) Veröffentlichungstag und Bekanntmachung des Hinweises auf die Patenterteilung: **05.11.2014**
(21) Anmeldenummer: 04030528.6
(22) Anmeldetag: 22.12.2004
(51) Int. Cl.: B29C 51/26, B29C 69/00

(54) **Vakuumformverfahren und Vakuumformmaschine mit einem geschlossenen Maschinengehäuse**
Method of vacuum forming and vacuum forming machine with a closed machine housing
Procédé et machine à former du vide avec un carter de machine fermé

(30) Priorität: 16.01.2004 DE 102004002431
(43) Veröffentlichungstag der Anmeldung: 31.08.2005
(73) Patentinhaber: GEISS Aktiengesellschaft, 96145 Sesslach (DE)
(72) Erfinder: Geiss, Manfred, 96145 Sesslach (DE)
(74) Vertreter: Isarpatent

(56) Entgegenhaltungen:
- EP-A1- 0 571 897
- EP-A1- 0 761 412
- DE-A1- 2 427 311
- DE-A1- 2 504 440
- DE-A1- 4 117 197
- DE-A1- 19 629 196
- DE-C1- 4 223 785
- US-A- 3 412 183
- US-A- 4 801 347
- US-A- 5 500 067
- US-B1- 6 372 176

## Beschreibung

Die Erfindung betrifft eine Vakuumformmaschine mit einem geschlossenen Maschinengehäuse zur Herstellung eines doppelwandigen Hohlkörper- bzw. Twinsheetteils aus zwei parallel transportierten endlosen thermoplastischen Materialbahnen mit Hilfe eines zwischen diesen vorgesehenen Distanz- bzw. Twinsheetrahmens, der zur Schaffung von geschlossenen Maschinenkammern mit den zu verformenden Materialbahnabschnitten mittels eines Spannrahmens belastbar ist, sowie ein Verfahren zur Herstellung eines derartigen Twinsheetteils mit einer derartigen Vakuumformmaschine.

Vakuumformmaschinen dienen dazu, thermoplastische Materialzuschnitte oder Materialbahnen unter Einsatz von Vakuum zu verformen. Für die Herstellung von Hohlkörpern ist bereits ein sogenanntes Twinsheetverfahren bekannt, bei dem zwei Materialzuschnitte oder Materialbahnen gleichzeitig verarbeitet werden, wobei die Wärme der erhitzten thermoplastischen Zuschnitte nach der Herstellung von zwei Halbschalen ausgenutzt wird, um diese beiden Halbschalen ohne ein zusätzliches Schweißen oder Kleben rationell und umweltschonend miteinander zu verschweißen. Im Zusammenhang mit der Vakuumverformung und dem Verschweißen der beiden Materialzuschnitte oder Materialbahnabschnitte, die üblicherweise vertikal übereinander eingespannt werden, ist es bekannt, zwischen diesen einen Distanz- bzw. Twinsheetrahmen vorzusehen, um die Materialzuschnitte bzw. Materialbahnabschnitte in einem definierten Abstand zu halten.

Die Durchführung des Twinsheetverfahrens erfolgt im Stand der Technik üblicherweise in einem offenen Maschinengehäuse, wobei die Materialbahnen in sogenannte Nadelketten eingeführt und nacheinander durch eine oder mehrere Heizzonen durchgetaktet werden. Nach der Beheizung der thermoplastischen Materialbahnen werden diese in die Formstation eingeführt und eine Oberform und eine Unterform dort zusammengefahren und das Twinsheetteil dann als Hohlkörper geformt. Als nachteilig ist bei derartigen Mehrstationenmaschinen anzusehen, daß sich die thermoplastischen Materialzuschnitte oder Materialbahnabschnitte während der Beheizung dehnen und unter dem Eigengewicht mehr oder weniger durchhängen, wodurch nur Materialien mit geringem Durchhang eingesetzt oder/und kleine Formteile hergestellt werden können. Bei derartigen Maschinen mit offenem Maschinengehäuse bzw. open-chamber-Maschinen kann in nachteiliger Weise der schwerkraftbedingte Durchhang der zu verformenden Materialien nicht kompensiert werden.

Eine Regelung des Durchhangs ist bei sogenannten Einstationenmaschinen bzw. Maschinen mit einem geschlossenen Maschinengehäuse oder closed-chamber-Maschinen möglich, wobei diese vorbekannten Maschinen jedoch nur als Plattenmaschinen konfiguriert sind, die mit einzelnen Materialzuschnitten arbeiten.

Die nächstliegende Stand der Technik Offenlegungsschrift DE 41 17 197 A1 offenbart ein Verfahren zur Herstellung von in sich geschlossenen profilierten Kunststoffteilen mit Hohlräumen, wobei gleichzeitig zwei Folien oder Platten aus Thermoplast eingespannt und jeweils einseitig von aussen bis zur durchgehenden Plastifizierung beheizt und die beiden plastifizierten Folien oder Platten sodann in einem einzigen Arbeitsgang getrennt voneinander verformt und ohne Zusatzmittel unter Druck verschweisst werden.

Die DE 42 43 785 C1 offenbart ein Servoventil nach dem Prinzip der geschlossenen Mitte, wobei ein mit Gleitstein bezeichnetes Teil innerhalb einer ihn eng umschliessenden Innenkontur eines Gehäuses geringfügige Bewegungen in einer Ebene ausführt und in Korrespondenz mit zwei zusätzlichen in gleicher Richtung beweglichen Ventilschiebern und die Verbindungen zwischen einem hydraulischen Speicher und den Druckräumen eines hydraulischen Verbrauchers öffnet.

Der Erfindung liegt die Aufgabe zugrunde, eine Vakuumformmaschine sowie ein Verfahren zur Herstellung eines Twinsheetteils der eingangs genannten Art verfügbar zu machen, die bzw. das eine Kontrolle des Materialdurchhangs beider Materialbahnen während der Aufheizung und der Vorformung zur kontinuierlichen und kostengünstigen Herstellung größerer Twinsheetteile ermöglicht.

Erfindungsgemäß wird diese Aufgabe vorrichtungsseitig durch die Merkmale des Anspruchs 1 und verfahrensseitig durch die Merkmale des Anspruchs 7 gelöst.

Bevorzugte Vorrichtungsmerkmale, die die Erfindung vorteilhaft weiterbilden, sind in den Ansprüchen 2 bis 6 angegeben.

In vorteilhafter Weise macht die Erfindung eine Vakuumformmaschine zur Herstellung von doppelwandigen Formteilen bzw. Hohlformteilen bzw. Twinsheetteilen aus der Verarbeitung von zwei endlosen Materialbahnen verfügbar, wobei für beide Materialbahnen ein geschlossenes Maschinengehäuse vorgesehen ist. Für den Transport der Materialbahnen muß der Twinsheetrahmen lediglich entlastet werden, und zum Entformen des Twinsheetteils braucht lediglich nach dem Herausfahren der beiden Werkzeughälften der in Transportrichtung der Materialbahnen vordere vom liegenden Rahmenabschnitt entfernt zu werden. Dabei ist vorzugsweise ein seitliches Herausziehen vorgesehen, wonach dann das Twinsheetteil im endlosen Band durch die bis zu dem vorderen Rahmenabschnitt wirksame Transporteinrichtung, vorzugsweise paarweise Nadelketten, aus dem Twinsheetrahmen herausgeschoben und anschließend mittels einer Schneideinrichtung abtrennbar ist.

Der Twinsheetrahmen ist bevorzugt mit rechtwinklig zueinander angeordneten rechteckigen Rahmenabschnitten ausgebildet, wobei alle Rahmenabschnitte außer dem vorderen in Transportrichtung der Materialbahnen vom liegende Rahmenabschnitt ortsfest in der Vakuumformmaschine angeordnet sind. Der Twinsheetrahmen definiert einen Ausschnitt entsprechend der maximalen Formteilgröße, wobei die Formen der Verarbeitung der Materialbahnen an dem vorderen Rahmenabschnitt, in Transportrichtung der Materialbahn gesehen, bündig eingebaut werden müssen.

Vorteilhaft sind vier Nadelkettenleistenanordnungen vorgesehen, die in zwei Paaren arbeiten, wobei ein Paar Nadelkettenleistenanordnungen die obere und ein zweites Paar die untere Materialbahn bzw. Materialfolie transportieren. Die Anordnung ist dabei so betroffen, daß die Nadelketten, die unten transportierende Ketten sind und am Materialeinlauf von oben in das Material einstechen und es entlang der unteren Kante der jeweiligen Nadelkette transportieren, jeweils vor dem vorderen Rahmenabschnitt enden, um ein seitliches Herausfahren des vorderen Rahmenabschnitts zu ermöglichen.

Für die Durchführung des Verfahrens ist beim Transport der Materialbahnen lediglich ein Entlasten des zwischen diesen angeordneten Twinsheetrahmens erforderlich, und die Nadelketten können fest auf den Materialbahnen aufliegen. Für den eigentlichen Thermoformvorgang ist vorgesehen, daß der oberhalb des Twinsheetrahmens vorgesehene Spannrahmen sich nach unten bewegt und dadurch beide Materialbahnen und die Twinsheetleisten zur Schaffung zweier geschlossener Maschinenkammern festklemmt. Die erste Maschinenkammer wird durch eine in der Formstation vorgesehene stationäre Fensterplatte im Zusammenhang mit der unteren Materialbahn gebildet, während die zweite geschlossene Maschinenkammer durch die untere Materialbahn, die unteren Nadelkettenleistenanordnungen, den geschlossenen Twinsheetrahmen und die obere Materialbahn geschaffen wird.

Nachfolgend wird die Erfindung unter Bezugnahme auf die beigefügten Figuren näher erläutert. Es zeigen:
- Fig. 1: eine schematisierte Draufsicht auf den Verformungsbereich innerhalb der Vakuumformmaschine entlang der Schnittlinie I-I in Fig. 2;
- Fig. 2: einen schematisierten Schnitt entlang der Schnittlinie II-II in Fig. 1;
- Fig. 3: einen Schnitt entlang der Schnittlinie III-III in Fig. 1;
- Fig. 4: eine Schnittdarstellung ähnlich Fig. 1 mit einer angedeuteten Materialbahn mit verformten und verschweißten Twinsheetteilen;
- Fig. 5: einen Schnitt entlang der Schnittlinie V-V in Fig. 4;
- Fig. 6: einen Schnitt entlang der Schnittlinie VI-VI in Fig. 4;
- Fig. 7: eine Darstellung ähnlich Fig. 4, jedoch mit seitlich herausgezogenem in Transportrichtung der Materialbahnen vorn liegenden Twinsheetrahmenabschnitt;
- Fig. 8: einen Schnitt entlang der Schnittlinie VIII-VIII in Fig. 7; und
- Fig. 9: einen Schnitt entlang der Schnittlinie IX-IX in Fig. 7.

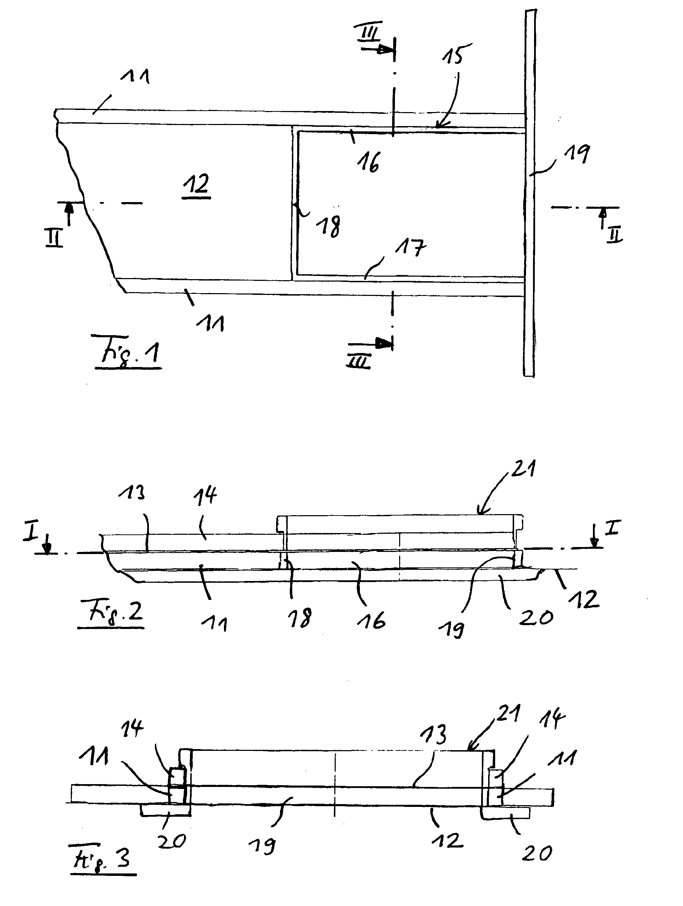

In den Figuren 1 bis 3 sind schematisierte Schnitte von Verarbeitungsbereichsabschnitten einer erfindungsgemäßen Vakuumformmaschine dargestellt. Ein unteres Paar von Nadelkettenleistenanordnungen 11 für den Transport einer unteren gespannten Materialbahn 12 ist oberhalb der Materialbahn 12 nur randseitig angebracht. Eine gespannte obere Materialbahn 13 ist parallel beabstandet zu der unteren gespannten Materialbahn 12 angeordnet, wobei oberhalb der oberen Materialbahn 13 an beiden Seiten ein oberes Paar von Nadelkettenleistenanordnungen 14 vorgesehen ist. Die Nadelkettenleistenanordnungen 11 und 14 stechen jeweils von oben in die Materialbahnen 12 bzw. 13 ein und transportieren die jeweiligen Materialbahnen 12 bzw. 13 entlang der unteren Kante der jeweiligen Nadelkette.

Zwischen den Materialbahnen 12 und 13 ist ein Twinsheetrahmen 15 angeordnet, der rechteckförmig gestaltet ist und aus zwei festen gegenüberliegenden Seitenabschnitten 16 und 17, einem diese verbindenden rückseitigen Rahmenabschnitt 18 und einem in Transportrichtung der Materialbahnen vom liegenden vorderen Rahmenabschnitt 19 besteht. Die Rahmenabschnitte 16, 17 und 18 sind ortsfest in der Vakuumformmaschine zwischen den Materialbahnen 12 und 13 angeordnet, während der vordere Rahmenabschnitt 19 zur Seite zur Freigabe des gesamten Querschnitts innerhalb des Twinsheetrahmens 15 bewegbar ist, wie nachfolgend noch erläutert wird. Der vordere Rahmenabschnitt 19 erstreckt sich über beide Seiten des Twinsheetrahmens 15 hinaus, und die Nadelkettenleistenanordnungen 11 und 13 enden unmittelbar vor dem vorderen Rahmenabschnitt 19.

Unterhalb der unteren Materialbahn 12 ist eine Fensterplatte 20 angeordnet, und über der oberen gespannten Materialbahn 13 befindet sich ein Spannrahmen 21 mit dem selben Format wie der Twinsheetrahmen 15. Der Spannrahmen 21 ist für den Transport der vorherigen Materialbahnen in die Formstation aus einer die obere Materialbahn 13, den Twinsheetrahmen 15 und die untere Materialbahn 12 gegen die Fensterplatte 20 drückenden Stellung geringfügig zur Entlastung anhebbar und dann für die Durchführung des Formvorgangs zur Belastung absenkbar.

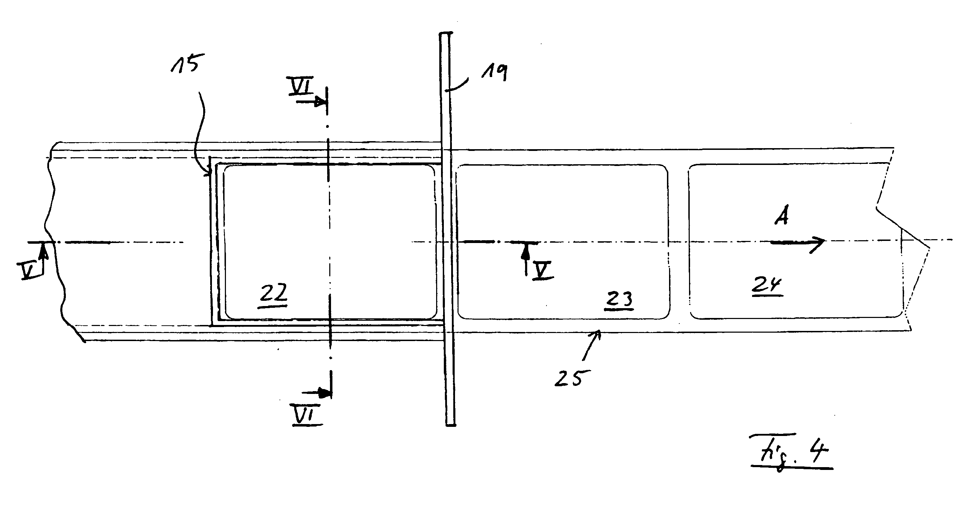

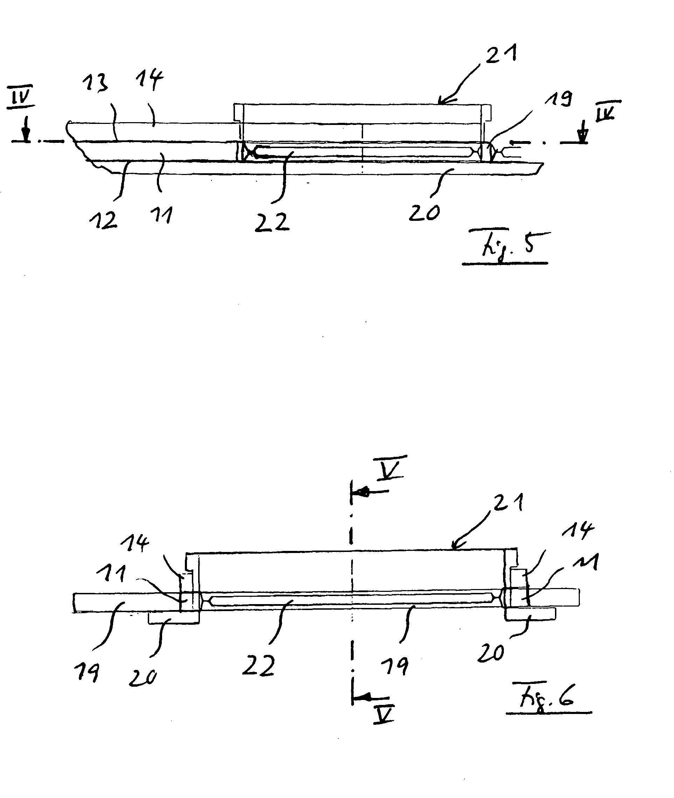

In den Figuren 4 bis 6 ist ergänzend zu den Figuren 1 bis 3 eine Materialbahn mit verformten und verschweißten Twinsheetteilen 22 bis 24 zur Veranschaulichung der Herstellung der Twinsheetteile in einem endlosen Band 25 gezeigt, wobei der vordere Rahmenabschnitt 19 des Twinsheetrahmens 15 sich noch in einer den Twinsheetrahmen 15 schließenden Stellung befindet. Das Band 25 bzw. die Materialbahnen 12 und 13 bewegen sich in eine Transportrichtung A taktweise, wobei die Länge eines Taktes durch den Abstand zwischen einzelnen Twinsheetteilen 22 bis 24 bestimmt ist.

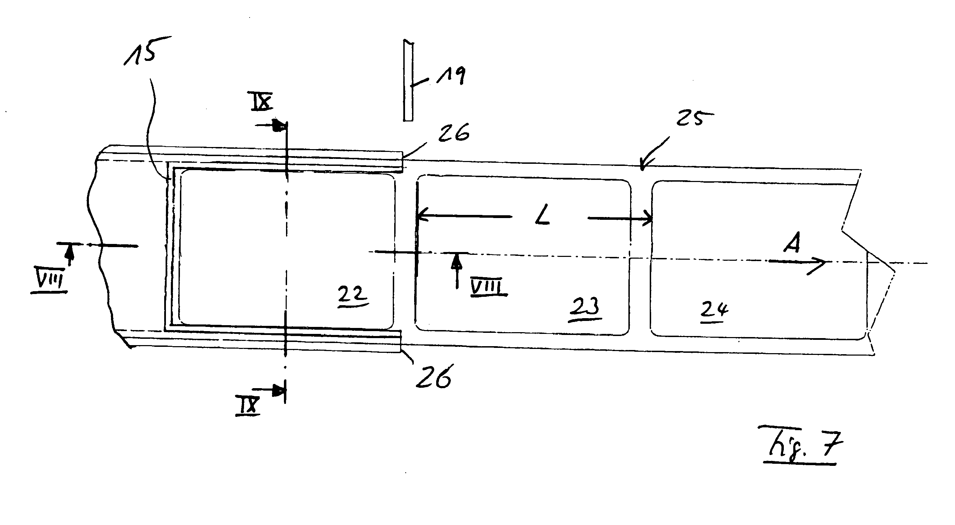

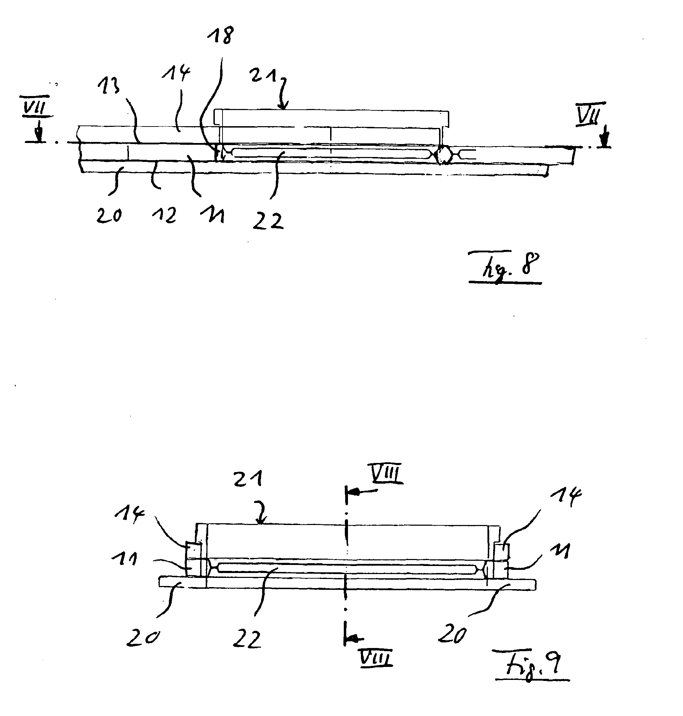

Die Darstellung in den Figuren 7 bis 9 unterscheidet sich von der in den Figuren 4 bis 6 nur dadurch, daß der vordere Rahmenabschnitt 19 seitlich aus dem Bereich zwischen den vorderen Enden 26 der oberen und unteren Nadelkettenleistenpaare 11 und 14 herausbewegt ist. Das Band 25 mit den Twinsheetteilen 22 bis 24 ist nunmehr bereit für einen weiteren Transport in Richtung A um die entsprechende Länge L, um das nächste Twinsheetteil vakuumzuformen. Das seitliche Herausfahren des vorderen Rahmenabschnitts 19 wird bevorzugt pneumatisch vorgenommen, kann jedoch auch elektromotorisch oder hydraulisch erfolgen.

Die erfindungsgemäße Vakuumformmaschine arbeitet mit einer Prozeßsteuerung, die die Antriebe der Nadelkettenanordnungen 11, 14, das Be- und Entlasten des Spannrahmens 21, den eigentlichen Vakuumformvorgang, das Ein- und Ausfahren des vorderen Rahmenabschnitts 19, den taktweisen Ablauf und das Abtrennen von geformten Twinsheetteilen 23, 24 steuert. Das Vakuumformen selbst erfolgt in an sich bekannter Weise, wobei in dem geschlossenen Maschinengehäuse der Durchhang des Materials während der Aufheizung und Verformung kontrolliert und gegebenenfalls kompensiert wird. Der Transport der Materialbahnen erfolgt taktweise bei unbelasteten und in Transportrichtung A offenen Twinsheetrahmen 15, wie in Figur 7 angedeutet, und der Twinsheetrahmen 15 wird zum Formen eines Twinsheetteils geschlossen und mit dem Spannrahmen 21 belastet.

## Patentansprüche

1. Vakuumformmaschine zur Herstellung eines doppelwandigen Twinsheetteils (22, 23, 24) aus zwei parallel transportierten endlosen thermoplastischen Materialbahnen (12, 13) mit Hilfe eines zwischen diesen vorgesehenen Twinsheetrahmens (15), der zur Schaffung von geschlossenen Maschinenkammern mit den zu verformenden Materialbahnabschnitten mittels eines Spannrahmens (21) belastbar ist,
wobei der Twinsheetrahmen (15) in Transportrichtung (A) der Materialbahnen (12, 13) einen vom liegenden vorderen Rahmenabschnitt (19) besitzt, der zum Entformen des Twinsheetteils (22) entfernbar ist, und
der vordere Rahmenabschnitt (19) seitlich herausfahrbar ist, und
wobei für den Transport der Materialbahn (12, 13) Nadelkettenleistenanordnungen (11, 14) vorgesehen sind, die in Transportrichtung (A) der Materialbahnen (12, 13) vor dem vorderen Rahmenabschnitt (19) enden.

2. Vakuumformmaschine nach Anspruch 1, **dadurch gekennzeichnet, daß** sich der vordere Rahmenabschnitt (19) über die gesamte Breite des zu formenden Twinsheetteils (22) hinaus erstreckt.

3. Vakuumformmaschine nach einem der vorangehenden Ansprüche, **dadurch gekennzeichnet, daß** der Twinsheetrahmen (15) bis auf den vorderen Rahmenabschnitt (19) ortsfest angeordnet ist.

4. Vakuumformmaschine nach Anspruch 1, **dadurch gekennzeichnet, daß** für jede Materialbahn (12, 13) eine paarweise vorgesehene Nadelkettenleistenanordnungen (11, 14) vorgesehen ist.

5. Vakuumformmaschine nach einem der vorangehenden Ansprüche, **dadurch gekennzeichnet, daß** jedes Twinsheetteil (22, 23, 24) einen Abschnitt eines endlosen Bandes (25) bildet, der nach Entformung des Twinsheetteils (22, 23, 24) aus der Vakuumformmaschine herausschiebbar ist.

6. Vakuumformmaschine nach Anspruch 5, **dadurch gekennzeichnet, daß** jedes aus der Vakuumformmaschine herausgeschobene Twinsheetteil (23, 24) mittels einer Schneideinrichtung vom endlosen Band (25) abtrennbar ist.

7. Verfahren zur Herstellung eines doppelwandigen Twinsheetteils (22, 23, 24) aus zwei parallel transportierten endlosen thermoplastischen Materialbahnen (12, 13) in einer Vakuumformmaschine mit Hilfe eines zwischen den Materialbahnen vorgesehenen Twinsheetrahmens (15), der zur Schaffung von geschlossenen Maschinenkammern mit den zu verformenden Materialabschnitten mittels eines Spannrahmens (21) belastbar ist,
wobei die Materialbahnen (12, 13) taktweise bei unbelastetem und in Transportrichtung offenem Twinsheetrahmen (15) transportiert werden,
wobei der Twinsheetrahmen (15) zum Formen des Twinsheetteils (22, 23, 24) geschlossen und mit dem Spannrahmen (21) belastet wird, und
wobei ein in Transportrichtung (A) der Materialbahnen (12, 13) vom liegender vorderer Rahmenabschnitt (19) des Twinsheetrahmens (15) zum Entformen des Twinsheetteils (22) entfernt wird, indem dieser seitlich herausgefahren wird, und wobei für den Transport der Materialbahn (12, 13) Nadelkettenleistenanordnungen (11, 14) vorgesehen sind, die in Transportrichtung (A) der Materialbahnen (12, 13) vor dem vorderen Rahmenabschnitt (19) enden.

## Claims

1. Vacuum forming machine for manufacturing a double-wall twin sheet part (22, 23, 24) from two continuous thermoplastic material webs (12, 13) which are transported in parallel, using a twin sheet frame (15) which is provided between said webs and which can be loaded using a clamping frame (21) so as to create closed machine chambers with the material web portions to be deformed,
the twin sheet frame (15) having a front frame portion (19) which is positioned in front in the transport direction (A) of the material webs (12, 13) and which can be removed for deforming the twin sheet part (22), and
it being possible to pull the front frame portion (19) out laterally, and
spiked chain bar arrangements (11, 14), which end upstream from the front frame portion (19) in the transport direction (A) of the material webs (12, 13), being provided for transporting the material web (12, 13).

2. Vacuum forming machine according to claim 1, **characterised in that** the front frame portion (19) extends out over the entire width of the twin sheet part (22) to be formed.

3. Vacuum forming machine according to either of the preceding claims, **characterised in that** the twin sheet frame (15) is arranged stationary apart from the front frame portion (19).

4. Vacuum forming machine according to claim 1, **characterised in that** a spiked chain bar arrangements (11, 14), provided in pairs, are provided for each material web (12, 13).

5. Vacuum forming machine according to any of the preceding claims, **characterised in that** each twin sheet part (22, 23, 24) forms a portion of a continuous band (25), which can be slid out of the vacuum forming machine after the twin sheet part (22, 23, 24) has been deformed.

6. Vacuum forming machine according to claim 5, **characterised in that** each twin sheet part (23, 24) which is slid out of the vacuum forming machine can be separated from the continuous band (25) using a cutting device.

7. Method for manufacturing a double-wall twin sheet part (22, 23, 24) from two continuous thermoplastic material webs (12, 13) which are transported in parallel, in a vacuum forming machine, using a twin sheet frame (15) which is provided between the material webs and which can be loaded using a clamping frame (21) so as to create closed machine chambers with the material web portions to be deformed,
wherein the material webs (12, 13) are transported in a synchronised manner when the twin sheet frame (15) is unloaded and open in the transport direction,
wherein the twin sheet frame (15) is closed and loaded using the clamping frame (21) to shape the twin sheet part (22, 23, 24), and
wherein a front frame portion (19) of the twin sheet frame (15), positioned in front in the transport direction (A) of the material webs (12, 13), is removed for deforming the twin sheet part (22) in that it is pulled out laterally, and
wherein spiked chain bar arrangements (11, 14), which end upstream from the front frame portion (19) in the transport direction (A) of the material webs (12, 13), are provided for transporting the material web (12, 13).

## Revendications

1. Machine de formage sous vide pour la fabrication d'un élément à double coque à paroi double (22, 23, 24) à partir de deux bandes de matériau (12, 13) thermoplastiques sans fin transportées en parallèle par l'intermédiare d'un cadre double coque (15) prévu entre ces dernières, qui peut être sollicité, pour la réalisation de chambres de machine fermées à partir des sections de bandes de matériau à déformer, au moyen d'un cadre tenseur (21),
dans laquelle le cadre double coque (15) possède, dans le sens de transport (A) des bandes de matériau (12, 13), une section de cadre avant prévue à l'avant (19), qui est amovible pour le démoulage de l'élément à double coque (22), et
la section de cadre avant (19) peut être dégagée latéralement, et
dans laquelle des arrangements de rives de chaînes à picots (11, 14) sont prévus pour le transport de la bande de matériau (12, 13), qui finissent dans le sens de transport (A) des bandes de matériau (12, 13) devant la section de cadre avant (19).

2. Machine de formage sous vide selon la revendication 1, **caractérisée par le fait que** la section de cadre avant (19) s'étend au-delà de la totalité de la largeur de l'élément à double coque à former (22).

3. Machine de formage sous vide selon l'une quelconque des revendications précédentes, **caractérisée par le fait que** le cadre double coque (15) est disposé de manière fixe à l'exception de la section de cadre avant (19).

4. Machine de formage sous vide selon la revendication 1, **caractérisée par le fait qu'**un arrangement de rives de chaînes à picots (11, 14) prévu par paires est prévu pour chaque bande de matériau (12, 13).

5. Machine de formage sous vide selon l'une quelconque des revendications précédentes, **caractérisée par le fait que** chaque élément à double coque (22, 23, 24) forme une section d'une bande sans fin (25), qui peut être extraite par coulissement de la machine de formage sous vide après le démoulage de l'élément à double coque (22, 23, 24).

6. Machine de formage sous vide selon la revendication 5, **caractérisée par le fait que** chaque élément à double coque (23, 24) extrait par coulissement de la machine de formage sous vide peut être détaché de la bande sans fin (25) au moyen d'un dispositif de découpe.

7. Procédé de formage sous vide pour la fabrication d'un élément à double coque à paroi double (22, 23, 24) à partir de deux bandes de matériau (12, 13) thermoplastiques sans fin transportées en parallèle dans une machine de formage sous vide par l'intermédiare d'un cadre double coque (15) prévu entre les bandes de matériau, qui peut être sollicité, pour la réalisation de chambres de machine fermées à partir des sections de matériau à déformer, au moyen d'un cadre tenseur (21), dans lequel les bandes de matériau (12, 13) sont transportées en cadence avec un cadre double coque (15) non sollicité et ouvert dans le sens du transport,
dans lequel le cadre double coque (15) est fermé pour former l'élément à double coque (22, 23, 24) et sollicité par le cadre tenseur (21), et
dans lequel une section de cadre avant prévue à l'avant (19) du cadre double coque (15) dans le sens du transport (A) des bandes de matériau (12, 13) est retirée pour démouler l'élément à double coque (22), en la dégageant latéralement, et
dans lequel des arrangements de rives de chaînes à picots (11, 14) sont prévus pour le transport de la bande de matériau (12, 13), qui finissent dans le sens de transport (A) des bandes de matériau (12, 13) devant la section de cadre avant (19).
